# EUROPEAN PATENT SPECIFICATION

(11) **EP 1 943 708 B1**
(45) Date of publication and mention of the grant of the patent: **05.01.2011**
(21) Application number: 06806332.0
(22) Date of filing: 12.10.2006
(51) Int. Cl.: H02J 13/00, H02J 9/00

(54) **EMERGENCY LIGHT SYSTEM AND LUMINAIRE MODULE**
NOTLICHTSYSTEM UND BELEUCHTUNGSVORRICHTUNGSMODUL
SYSTÈME D'ÉCLAIRAGE DE SECOURS ET MODULE LUMINAIRE

(30) Priority: 13.10.2005 GB 0520866
(43) Date of publication of application: 16.07.2008
(73) Proprietor: Thomas & Betts International, Inc., Wilmington, DE 19809 (US)
(72) Inventor: HITZEMANN, Reiner, 12099 Berlin (DE); YOUNG, Neil, Harrogate North Yorkshire HG2 8NT (GB); BUCK, Keith, Featherstone WF7 6LW West Yorkshire (GB)
(74) Representative: Obst, Bernhard
(86) International application number: PCT/EP2006/009999
(87) International publication number: WO 2007/042330

(56) References cited:
- EP-A2- 0 978 924
- DE-A1- 19 814 366
- GB-A- 2 331 390
- US-A- 3 978 388
- US-A- 5 455 761

## Description

The invention relates to an emergency lighting system according to the preamble of claim 1 and a luminaire module according to the preamble of claim 11.

Emergency lighting systems are well known in the art. Emergency lighting systems e.g. for buildings or the like usually comprise an emergency lighting plant, which receives power from a central electric main supply, and one or a plurality of general lighting plants, which receives power either also from the central electric main supply or usually from one or several local electric main supplies. The local electric main supplies are usually sub-distributors of the central electric main supply.

The advantage of having several local electric main supplies and associated therewith several general lighting plants is a reduction in wiring effort, complexity and vulnerability of the whole lighting system in a building or building complex.

An emergency lighting plant normally comprises several emergency light end circuits, which contain emergency luminaires. The Emergency luminaires can be grouped by their different functionality. A first group comprises steady-burning lights (also called "maintained lights") and a second group comprises stand-by lights (also called "non-maintained lights"). The steady-burning lights are used to illuminate objects or locations which bear significance for security, especially in emergency situations, such as illuminated signs, emergency exits, fire extinguishers, fire hoses, etc. Therefore, it is mandatory that the supply of the steady-burning lights with electricity is maintained and guaranteed in any case at all times. The object of the stand-by lights is to provide lighting in emergency situations only, e.g. if the general lighting plant is not functioning anymore. Therefore, even though the stand-by lights will not be active permanently, their supply with electricity still needs to be guaranteed at any times, together with a functionality provided by the emergency lighting plant of activating the stand-by lights whenever necessary.

A main task of the emergency lighting system is to monitor the status of the general lighting plants and their power supply and components. In case of any error, e.g. a drop of voltage in an individual section of one of the general lighting plants, it is the duty of the emergency lighting system to activate an emergency mode, in which, firstly, the function of the steady-burning lights is maintained and, secondly, the stand-by lights are switched on additionally. In the emergency mode, the emergency lighting system ensures a steady power supply to the emergency luminaires of the emergency lighting plant. If a drop of voltage is detected in the local main supply only, the system will still supply electric power from the still functioning central electric main supply to the emergency lighting plant. However, if there is also an error in the central electric main supply, the emergency lighting system will switch to a backup or emergency power supply in order to maintain the electric power supply for the emergency lighting plant. The emergency power supply usually comprises a central battery. Alternatively or additionally the emergency power supply can comprise a generator, which is automatically started in an emergency condition. For detecting a voltage drop, conventional voltage monitors, such as resistors, are used. For switching the power supply for the end circuits between the different power sources, conventional switch over devices are used.

Safety regulations in some countries like Germany require having two separate end circuits. To achieve the required functionality without having switches in the emergency light end circuits, which are also prohibited in many of theses countries it used to be necessary to have additionally two separate types of emergency light end circuits in any area where steady- burning lights as well as stand-by lights are present. This requires four end circuits in one area. Two for steady-burning lights and two for stand-by lights. In another approach always both types of emergency luminaires are operated in one end circuit. Cutting the number of end circuits in half. Though, to be able to switch the stand-by lights on and off switching information is has to be provided via a separate wire or line. In both systems the wiring is very complex, which increases the cost for installing such emergency lighting systems.

Therefore, recent endeavours focused on solutions which do not require the separation of the end circuits for steady-burning lights and stand-by lights and which allow omitting additional control lines to each individual luminaire. However, if steady-burning lights and stand-by lights are to run within the same end circuit without additional control lines, it is necessary to find means to transmit the switching information to the luminaires via the supply line while at the same time distinguishing between at least those two functional groups of luminaires, namely steady-burning lights and stand-by lights, is still possible.

Different approaches of this kind are known in the art. EP 0939476 B1 describes an emergency lighting system where the AC- power is supplied to end circuits in a normal condition. In emergency condition DC-Power is supplied to the end circuits. The stand-by lights are connected to luminaire modules that can detect the type of current supplied. When DC-power is supplied the stand-by lights are switched on. This happens regardless of whether the DC-power is pulsating rectified AC-power or "real" DC-power from a battery source. The pulsating rectified AC-power is supplied in a case of emergency, i. e. any error occurs in at least one section of the general lighting plant. The "real" DC-power is supplied to the end circuits from the battery source only in those cases where there is drop in voltage in the central electrical main supply.

EP 1 066 690 B1 discloses an emergency lighting system, which uses digitized signals to switch the separate luminaires. The signals are coded by varying the maximum voltage of pulsating AC- or DC-power and/or by suppressing complete cycles of AC-power or of pulses, when pulsating DC-power is used, or by rectifying half-cycles of AC-power or a combination thereof. By these digitized signals individual luminaires can be switched by their associated luminaire modules having addresses assigned to.

A problem with both approaches is the limited bandwidth of the transmission. In particular the approach chosen in EP 0939476 B1 allows only for transmitting and recognizing two different types of signals (AC or DC), which drastically reduces the flexibility and the versatility of the system. Although the solution suggested in EP 1 066 690 B1 provides a better transmission bandwidth, it still suffers from several setbacks. For example, as only one pulse can be created per half-wave or half-cycle or pulse of the current, the maximum transmission rate is limited by the frequency of the power supply (which is normally 50 or 60 Hz and, in case of rectified AC, 100 or 120 Hz respectively). The operability of both cases depends directly on the kind of the supply voltage. For the approach of EP 0939476 B1 the supply voltage in the normal operation mode needs to be AC, otherwise, if it is DC, the luminaires in the end circuits will immediately act on the wrong assumption of an emergency mode. For the EP 1 066 690 B1 solution the supply voltage also needs to be AC only, as the signal transmission is based on the positive pulses derived from the AC half-waves which are rectified. If (real) DC is used for the supply voltage, signal transmission is cut off.

Other methods, which make use of high frequency modulation in order to create a broader transmission bandwidth for example suggested in DE 36 18 790 A1, bear further disadvantages, as they are mostly complex, require expensive equipment and are prone to interference.

Furthermore, all known methods that intend to reduce the number of separated end circuits and individual control lines are based on a centralized structure, which concentrates the basic functionalities of the emergency lighting plant essentially in one central unit, that is detection of errors in the power supply, the switching between main power supplies or a central battery and the transmission of a switching signal to the luminaires in the end circuits. Such a centralized system is more prone to central failures, which affect the operability and reliability of the entire system. The system integrity depends completely on the integrity of the central control unit.

From GB 2 331 390 A an emergency lighting system capable of performing self-testing is known, which comprises a main power supply and a plurality of lighting units each having mains failure circuitry to monitor the main supply and to connect the lighting unit for operation to an auxiliary power supply in the event of failure of the main power supply. Each lighting unit further includes a testing circuit operative, on receipt of a command, to assess the condition of operational readiness of the lighting unit. A signal line connects a control unit to the testing circuit of one or more of the lighting units. In operation, the control unit applies signals to the signal line and detects signals which have been applied to the signal line by a testing circuit. Each one of the testing circuits is identified as from the others by an address. On detection of a signal indicating its address on the signal line, each testing circuit applies to the signal line a signal indicative of the operational readiness of the associated lighting unit.

From EP 0 978 924 A2 an emergency lighting system is known which comprises a central unit and subunits. The end circuits are connected to the subunits that may be wired in a redundancy-creating ring wiring system. The form of the current supplied is used to differentiate between different modes, i.e. different information is associated with different current forms. The creation of certain current forms can be realized in the subunits depending on information received from the general lighting plant and/or their local electric power supply. Even though some of the decisions for switching the emergency luminaires on and off is carried out in the subunits, the system is still very much reliant on the wire connection to the central unit of the emergency lighting system. It is difficult to expand such an emergency lighting system. When such a ring wiring system is used a short in one of the lines will lead to a failure of the complete system. Further the system is not very flexible in controlling individual luminaires in the emergency end circuits. The amount of different information that can be transmitted is very limited.

Thus it is an object of the invention to provide an emergency lighting system and luminaire modules cooperating with such an emergency lighting system that reduce the complexity of wiring needed to operate the system, which reduce the vulnerability of the emergency lighting system and increases the flexibility in operation modes that can be realized as well as the flexibility for future expansions.

Accordingly an emergency lighting system according to the features of claim 1 and a luminaire module according to the features of claim 11 are provided. The dependent claims describe preferred embodiments of the invention.

In particular an emergency lighting system is provided comprising a central unit connectable to a central main supply comprising at least one output and a central switch over device for connecting said at least one output with an emergency power supply instead of said central main supply in case of a central emergency condition; and at least one subunit having an input connected to said at least one output of the central unit, said at least one subunit being configured for distributing electrical power to a plurality of end circuit outputs, wherein a communication unit is associated with each said plurality of end circuit outputs for transmitting signals to luminaire modules over power lines of emergency light end circuit connectable to said respective end circuit output, wherein said signals are intended to control the operation of emergency luminaires operated by said luminaire modules; and a local control unit configured to initiate the transmission of said signals for controlling the operation of individual luminaires by said signals, especially in case of a local emergency detected by said local control unit, wherein said signals comprise a bit pattern by which said luminaire modules are addressable, by which in turn said individual luminaires are operated. Further a Luminaire module being connectable to power lines of an emergency light end circuit for operating at least one emergency luminaire is provided comprising a luminaire module communication unit configured to receive signals transmitted over said power lines and a luminaire module control unit connected to said luminaire module communication unit configured to control the operation of said at least one emergency luminaire according to said signals received, wherein one or several codes, especially an address, are assigned to said luminaire module and that said luminaire module control unit is configured to act upon receipt of one of said signals comprising a bit pattern containing one of said codes assigned to said luminaire module. It is advantageous to code the switching information in a bit pattern This enables a reliable and fast communication between the subunits and the luminaire modules. The flexibility of operation modes is increased drastically. Automated control sequences can be carried out by the emergency lighting system, in which the individual luminaires can be tested. According to the invention the luminaire module communication unit is capable to transmit signals over said power lines. It can thus for example exchange status data on emergency luminaires operated by said luminaire module. The term "individual luminaires" in this context covers single luminaires or several luminaires conntected to and operated by one luminaire module. A local emergency condition is any condition in which the switch on of any emergency lights connected to said at least one subunit is desired for other reasons than testing etc. In case there are several subunits not all subunits have to be in a local emergency condition at the same time. On the other hand a configuration can be chosen, in which a central emergency condition and/or a local emergency condition in a different subunit triggers a local emergency condition in said at least one subunit.

According to the invention the vulnerability to failures in the central unit are reduced. For this purpose according to the invention said at least one subunit comprises another input connectable to a local electrical main supply and a local switch over device for connecting the plurality of end circuit outputs alternatively with said other input in case of a normal condition to supply electrical power from the local electrical main supply or with said input in case of a local emergency condition associated with a failure in the power supplied by the local electrical main supply to supply power from the central unit to said plurality of end circuit outputs. A local emergency condition associated with a failure in the local electrical main supply is a special local emergency condition. Usually when such a failure in the power supply occurs at least certain emergency lights have to be switched on. Compared to emergency lighting systems according to the state of the art the vulnerability of the system is drastically reduced. A failure in the wiring connection between the central unit and the subunit does not lead to a complete failure of the emergency lighting connected to that subunit. This particular aspect of the invention is achieved in the emergency lighting system comprising a central unit connectable to a central main supply comprising at least one output and a central switch over device for connecting said at least one output with an emergency power supply instead of said central main supply in case of a central emergency condition; at least one subunit having an input connected to said at least one output of the central unit, said at least one subunit being configured for distributing electrical power to a plurality of end circuit outputs; in that said at least one subunit comprises another input connectable to a local electrical main supply and a local switch over device for connecting the plurality of end circuit outputs alternatively with said other input in case of a normal condition to supply electrical power from the local electrical main supply or with said input in case of a local emergency condition to supply power from the central unit to said plurality of end circuit outputs.

According to a preferred embodiment of the invention said bit pattern of said signals is made up of short voltage-drop pulses induced by said communication units in an output voltage of the power supplied to the respective one of said plurality of end circuit outputs. Thus a preferred embodiment of the luminaire module said luminaire module communication unit is configured to receive said signals comprising a bit pattern made up of short voltage-drop pulses in an voltage supplied over said power lines. This way high data rates for the transmission of information in said signals can be achieved. The communication becomes independent of long term voltage drops or fluctuations in the voltage supplied to the subunits compared to known systems that use a change in the maximum voltage to code information. It is further less disturbing on other systems due to crosstalk on wires running parallel to the power lines of the emergency end circuits than in systems using a high frequency modulation techniques to code the signal on the power lines of the emergency end circuits.

In a preferred embodiment of the invention said at least one subunit comprises a local control unit for monitoring internal and/or external information to detect a local emergency condition independently from a central control unit of the central processing unit. Thus the "intelligence" of the emergency lighting system is decentralised. This brings about several advantages. First the control logic becomes less complex. Each subunit only has to take care of the emergency luminaires connected to any of its emergency light end circuits. Thus the total number of these luminaires that needs to be handled in one control unit is decreased. Further the addition of new emergency light end circuits to the emergency lighting system can be realized by adding a new subunit. Thus an existing emergency system can be planed and executed very flexible. This is needed for building complexes, which are assembled and put into operation one by one over a longer period of time. In systems the addition of new emergency light end circuits used to require a wiring of each end circuit to the central unit, which is very labour and cost intensive. In case subunits for distribution of the power were used in known emergency systems, the availability for the complete system was limited in time of testing and incorporating the new end circuits and their subunit, since at least part of the control of the emergency lighting is handled in the central unit. Since the wiring to the subunits according to the proposed embodiment is preferably not carried out in a ring wiring system. Thus other subunits are not affected by the addition of new emergency light end circuits. Finally, by having to handle a limited number of luminaire modules only the switching of individual luminaires can be handled more quickly.

In contrast to having completely separated independent emergency lighting systems each comprising their own emergency power supply according to a preferred embodiment of the invention said the central unit comprises said emergency power supply, which itself comprises a battery and/or an emergency power generator. Only one emergency power supply incorporated in the central unit is used. This reduces the effort needed for maintenance. This especially applies to systems where an emergency power generator is used.

It is preferred that most of the testing of the emergency luminaires is carried out automatically by the emergency lighting systems. Thus in another preferred embodiment of the invention said first communication units are also capable of receiving said signals. Since at the same time the luminaire module communication unit is capable of transmitting signals over said power lines, it is, as stated above, possible for the luminaire modules and the subunits to exchange for example status data on the emergency luminaires operated by said luminaire modules.

Thus luminaire modules comprising a luminaire monitoring unit to monitor the status of said at least one emergency luminaire are even more preferred. The luminaire monitor can comprise a resistor in one of the lines connected to the emergency luminaire operated by said luminaire module. The monitoring unit just detects the voltage drop over the resistor to evaluate the status of the emergency luminaire. Of course more sophisticated monitors can be used.

To enable the passing of information between the central unit and the one of said subunits or even between the subunits an embodiment of the invention is proposed in which said central unit comprises one of said communication units for said at least one output and said at least one subunit comprises a further one of said communication units associated with the input from the central unit for exchanging signals over the power lines connecting the central unit with said at least one subunit. Thus information on the status of the subunits can for example be passed on to the central unit, which can be a collecting point of data for the whole system. Thus for example a central documentation of the tests carried out independently in the subunits can be kept. Further in case of any abnormal behaviour or local or central emergency condition all information present in the subunits could be supplied to the central unit. It has to be pointed out though that this does not affect the decision taking on the switching of the local switch over devices in the subunits or even the switching of certain luminaires in any of the emergency light end circuits. This communication ability created in this embodiment can also be used to relay the information to another subunit. Thus maintenance and service personal can chose any subunit to get the desired information and is does not need to be to the central unit always for getting this information. This is advantageous in large building complexes for example.

It is often preferred to have a flexible switching of the emergency luminaires being stand-by lights. For example it is desired to have those emergency lights turned on in case of a failure of the power in the general lighting plant or a section thereof only when the lights of the general lighting plant, in the region the emergency luminaire is situated, were or are in an switched-on state prior to or during the power failure. If for example none of the lights of the general lighting plant is switched on in a complete building of a building complex it might be desired to have none of the stand-by lights switched on on power failure in the general lighting plant associated with that building. Switch action anywhere in the building might be used to turn those stand-by lights on, for example when service personal moves into the building to look for the cause of the power failure. Thus a central unit is preferred having an information input for receiving information, especially on a switching status, from at least one general lighting plant, wherein the control unit of said at least one subunit is configured such that the information received can be processed to influence the signals intended to control said luminaire modules. Accordingly luminaire modules are preferred comprising an information input for receiving information, especially switching information, transmittable from a general lighting plant, wherein the luminaire module control unit is configured such that the information received can be processed to influence the operation of said at least one emergency luminaire. I.e. the luminaire modules can be wired to be capable of sensing local switching activity in the general lighting plant. Thus the information received can be the change of resistance (for example a drop to zero when a switch is activated) in an information line. In this case the luminaire module would be able to sense the switching action even in those situations, where there is a power failure in the general lighting plant. The information can then be transmitted to the subunit, which in turn can send signals to other luminaire modules.

To enable individual switching or polling of status information in test cycles of individual luminaires it is proposed to assign one or several codes, especially an address, to said luminaire module. Said luminaire module control unit is configured to act upon receipt of one of said signals comprising one of said codes assigned to said luminaire module.

It is proposed according to the invention that said signals are transmitted and/or received according to a protocol, wherein said protocol ensures that said signals are only transmitted when the output voltage is within predetermined voltage boundaries. This choice of a protocol where a transmission takes place only for example when the voltage is larger than a predetermined value guarantees a safe and reliable detection of the voltage drops the bits of the signal are coded in. Voltage drops are in this context always related to the absolute value. I.e. if the voltage is negative a voltage drop is a change in the voltage where the voltage becomes less negative.

In a preferred embodiment said luminaire modules are configured to switch their connected luminaires on and/or of in time periods only, not being provided by said protocol for the transmission of said signals. Therefore the transmission of signals is not affected by the switching of said luminaires.

An increased data rate and thus a flexible and versatile communication is enabled in a system and by a luminaire module when said bit patterns of said signals are coded at a frequency that is considerably higher than the frequency of AC-power supplied by the central electric main supply and/or said local electric main supply. Preferred are voltage drops of around 5 micro second duration and bit rates of around 12 kHz (though higher bit rates are achievable). A half-wave of a 50 Hz AC-voltage has duration of 10 ms and could thus carry up to 10 bytes of information, where one byte comprises 12 bits. Due to a choice of a protocol where a transmission is only possible when the voltage is above a certain predetermined level (usually 50% of the nominal voltage) this time period for the transmission reduces to around 4 to 6 ms or equivalently to 4 to 6 bytes. This is a drastic increase compared to the usual transmission rate of one bit per half cycle.

Such pulses are created in a preferred embodiment of the invention where said at least one subunits comprises a current former for forming the power supplied by the central unit or said local electric main supply such that DC-current is supplied to said emergency light end circuits and in that said end circuit outputs of said at least one subunit, are high impedance outputs comprising an inductor and in parallel a snubber diode that is anti-parallel to the direction of the DC current supplied by said end circuit outputs and wherein transmitter circuits of said communication units comprise a resistor in series with a solid-state switch positioned between the two poles of said end circuit outputs, such that the voltage-drop pulses are induced in the output voltage by pulsing the solid-state switch. The transmission circuits of the luminaire module communication units only comprise a resistor in series with a solid-state switch between the poles of the input, i.e. the transmission lines. With these transmission circuits the above mentioned bit transmission rates can be realized. A digitized signal can be used to drive the solid-state switch. Thus no elaborate and expensive circuitry is needed to generate the voltage-drop pulses. In order to prevent signal loading the luminaire is separated by a diode in the output of the luminaire module during sending of pulses by the luminaire module. Typical drop voltages are in the range of 20 V to 70 V. The use of a DC-voltage or a pulsating DC-voltage resulting from a rectified AC-voltage enables the use of these fairly simple and not very complex transmission circuits and is thus preferred.

To detect the voltage-drop pulses it is proposed that receiver circuits of said communication units comprise a resistor - capacitor network for receiving said signals. By the use of a DC-voltage also the receiver circuits can be constructed inexpensive and simple.

Preferred embodiments will now be described with reference to the accompanying drawing in which:
- Fig: 1: shows a schematic drawing of one embodiment of an emergency lighting system;
- Fig. 2: shows a schematic circuit diagram of an end circuit output and a transmitter and receiver circuit associated with it;
- Fig. 3: shows a schematic oscillograph display depicting the voltage verses time of a digital control signal driving the transmission circuit, the output voltage having the respective voltage-drop pulses of representing a bit pattern of a signal superimposed on, and the voltage picked up by a receiver circuit;
- Fig. 4: shows another schematic drawing representing an end circuit output of a subunit and a transmitter and receiver circuit associated with it;
- Fig. 5: shows a schematic diagram of a luminaire module; and
- Fig. 6: shows a schematic diagram of a subunit.

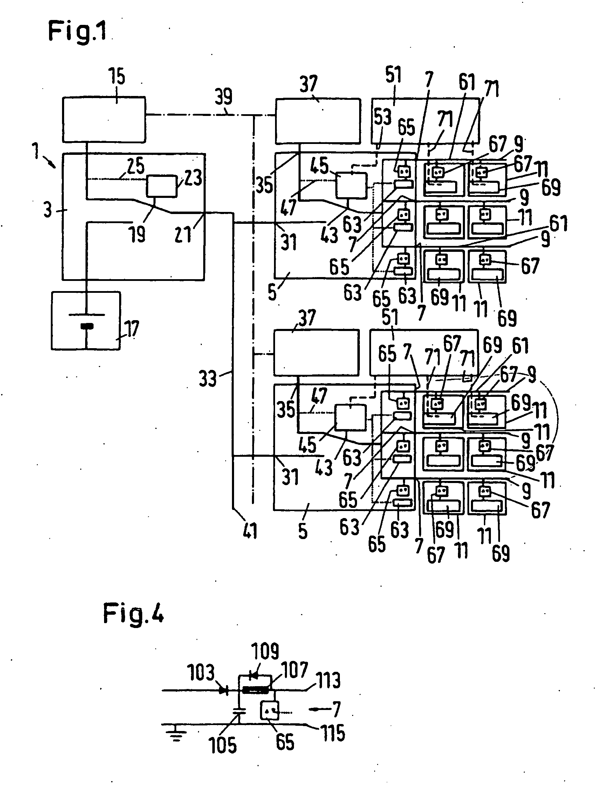

In Fig. 1 an emergency lighting system 1 is shown. It comprises a central unit 3 and subunits 5. The subunits 5 each comprise a plurality of end circuit outputs 7. Emergency light end circuit 9 are connected to said plurality of end circuit outputs 7. The emergency light end circuits 9 comprise luminaire modules 11. The luminaire modules 11 operate emergency luminaires 13 (not depicted). The emergency luminaires can be steady-burning light or stand-by lights or any other type of light used in or with emergency lighting systems.

The central unit 3 is connected to a central electrical main supply 15. The central unit is further connected to an emergency power supply 17. The emergency power supply is a battery. In other embodiment the emergency power supply 17 could be a generator. In yet another embodiment, the emergency power supply can be incorporated in the central unit 3. In cases, in which the emergency power supply is a battery, the central unit 3 usually also comprises electronics needed for recharging the battery. The central unit 3 further comprises a switch over device 19 for connecting at least one output 21 with the power supplied by the central electrical main supply under normal conditions. In an emergency condition when there is a drop in voltage or a complete failure in the central electrical main supply 15 the switch over device 19 is used to connect the emergency power supply 17 with the at least one output 21 of said central unit 3. A central control unit 23 controls the switch over device 19. In this embodiment a central monitoring device for detecting a drop in voltage and by this a fault or failure in the central electrical main supply 15 is incorporated into the central control unit 23 which is symbolically connected via a sensing line 25 to the input line coming from the central electrical main supply 15. Thus in an emergency condition the switch over device 19 is used to connect the at least one output 21 with the emergency power supply 17.

The subunits 5 have an input 31 each. These inputs 31 are connected with said at least one output 21 of said main unit 3. In the embodiment shown in Fig. 1 all subunits 5 are connected to the at least one output 21 via a bus-like power line 33. In other embodiments the topography might be star-like. I. e. the central unit comprises several outputs and each subunit is connected by an individual power line with one of said outputs. As is depicted by an open end 41 of the power line 33 further subunits 5 can be added to the emergency lighting system 1.

The subunits 5 each further comprise another input 35. These other inputs 35 are connected each to a local electric main supply 37. These local electric main supplies are connected to the central electrical main supply 15 via an extra wiring 39. The subunits 5 are configured in such a way that the power supplied by said local electrical main supplies 37 is distributed to the plurality of end circuit outputs 7 and thus to the emergency light end circuits 9 under normal conditions, i.e. the other inputs 35 are connected to the plurality of said end circuit outputs 7 via local switch over devices 43 controlled by local control units 45 under normal conditions. Alternatively the local switch over devices 43 can be used to connect the inputs 31 with said plurality of end circuit outputs 7 of said respective subunits 5.

The local control units 45 in this embodiment comprise a local monitoring unit capable of detecting a local emergency condition independently of said central unit 3. For this purpose internal and external information may be used. As depicted by a sensing line 47 a drop in voltage of the power supplied by the local electrical main supply 37 is monitored. In case a failure in the local electrical main supply 37 is detected the local switch over device 43 is actuated to connect the input 31 with said plurality of end circuit outputs 7. Thus now the power supplied by the central unit 3 is used to operate the emergency luminaires. Further other information for example from the general lighting plants 51 may be used for detecting said local emergency condition. The other information is for example transmitted via an information line 53. The other information can comprise for example switching information on lights of the general lighting plant 51. Besides controlling the local switch over device 43 the local control unit 45 effectuates the operation of the emergency luminaires. The local control unit 45 is responsible for sending signals over power lines 61 of the emergency light end circuits 9 at least to the luminaire modules 11 operating stand-by lights in any local emergency condition requiring emergency lights to be switched. The local control unit 45 provides switching information. This switching information is used to create digital control signals, which can be generated in the local control unit 45 or be generated by generating circuits 63. The digital control signals are used to drive solid-state switches in communication units 65. By actuating the solid-state switch in a transmitter circuit of the communication unit, voltage-drop pulses are created in the output voltage supplied to the respective emergency light end circuit. The luminaire modules 11 comprise luminaire module communication units 67 for receiving the signals transmitted over the power lines 61. The signals comprise a digital bit pattern, which is analyzed by luminaire module control units 69. One or several codes are assigned to the individual luminaire modules 11. The codes usually comprise an address of the luminaire module 11. Thus emergency luminaires 13 can be addressed individually via the luminaire modules 11 operating them. The exchange of said signals is carried out according to a protocol.

Additionally to the information lines 53 further information lines 71 are connected to some of said luminaire module control units 69. Thus information on the switching status of light of the general lighting plant 51 can be used to influence the operation of the emergency luminaires 13.

The luminaire module communication units 67 are also capable of transmitting signals over the power lines 61. In turn the communication units 65 of the subunits 5 are capable of receiving signals as well. Thus it is possible for the luminaire modules 11 to report on their and the associated emergency luminaire's status or on the switching information from the general lighting plant 51 detected. Thus a bidirectional communication over the power lines 61 can be carried out.

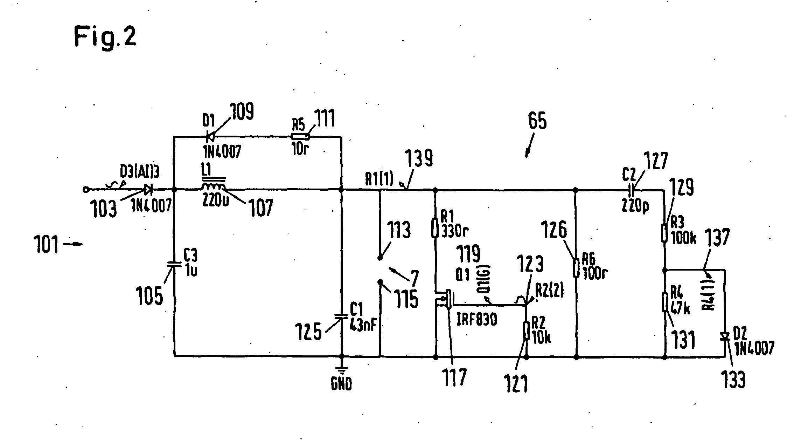

Fig. 2 shows a schematic circuit diagram 101 of one of the end circuit outputs 7 and the associated transmission and receiver circuit of the associated communication module 65 according to the embodiment depicted in Fig. 1. The power supplied, which is distributed to the end circuit outputs 7 is rectified. This is symbolized by a. diode 103. A capacitor 105 represents the capacity of the "power supply". An inductor 107 raises the impedance of the end circuit output. For a maximum end circuit load drawing a 10 A current the inductance of the inductor 107 is around 220 µH. A snubber diode 109 in series with a limiting resistor 111 is coupled parallel to the inductor 107. The snubber diode 109 is oriented anti-parallel to the rectifying diode 103.

Between the two poles 113 and 115 of the end circuit output 7 a solid-state switch 117 in series with another resistor 119 are coupled. These two elements together with a resistor 121 for setting the operating point of the solid-state switch 117 make up the transmitter circuit. Connected to a point marked by the reference numeral 123 a line (not shown) is connected carrying the digital control signal for driving the solid-state switch 117. During a positive pulse period the solid-state switch 117 connects the two poles 113 and 115 of the end circuit output 7 via resistor 119. Thus the current drawn through the inductor 107 suddenly increases. This leads to a voltage increase at the inductor 107 as the inductor 107 resists an increase in current flowing through it. The increase in voltage at the inductor 107 is associated with a drop in voltage across the resistor 119 that is now practically grounded via the solid-state switch. As there are resistors and capacitors, for example the capacitor 125 representing the capacity of the power lines 61 according to Fig. 1 the voltage ramps down only. As the change in current flowing through the inductor 107 decreases the voltage across the inductor decreases as well, which in turn leads to an increase of the voltage across the resistor 119. At the end of the pulse of the control signal the solid-state switch opens again, i. e. becomes high resistive. The voltage-drop over the inductor increases again but has a different sign this time. The snubber diode 109 and the resistor 111 ensure that the overshooting voltage is limited by having an equalizing current flowing through the snubber diode 109.

The resistor 126 in the circuit 101 represents the load of the luminaire modules. The capacitor 127 in series with the resistors 129 and 131, which is coupled parallel to a diode 133, symbolize the receiver circuit. The voltage picked up that is measured at a point depicted by the reference numeral 137 follows the voltage measured at a point depicted by reference numeral 139, which itself represents the output voltage of the end circuit output 7. The direct current component though has been eliminated by the capacity 127 in the pickup signal measured at point 137.

The transmitter circuit and the receiver circuit of the luminaire module communication unit are designed accordingly. The input of the luminaire module communication unit comprises an inductor and a snubber diode in the output though to which the emergency luminaire is connected. It also comprises a series diode to provide reverse polarity protection and prevent signal loading when transmitting a signal to the subunit.

In Fig. 4 a schematic circuit diagram of the end circuit output and the communication unit associated therewith is shown. The end circuit output comprises the inductor 107 and the snubber diode 109. The capacitor 105 is present to re-establish low impedance conditions at the power supply source. This prevents pulses from passing outside the emergency light end circuit. The rectified DC-current supplied to the end circuits is symbolized by the rectification diode 103. The rectification can take place centrally for all end circuit outputs.

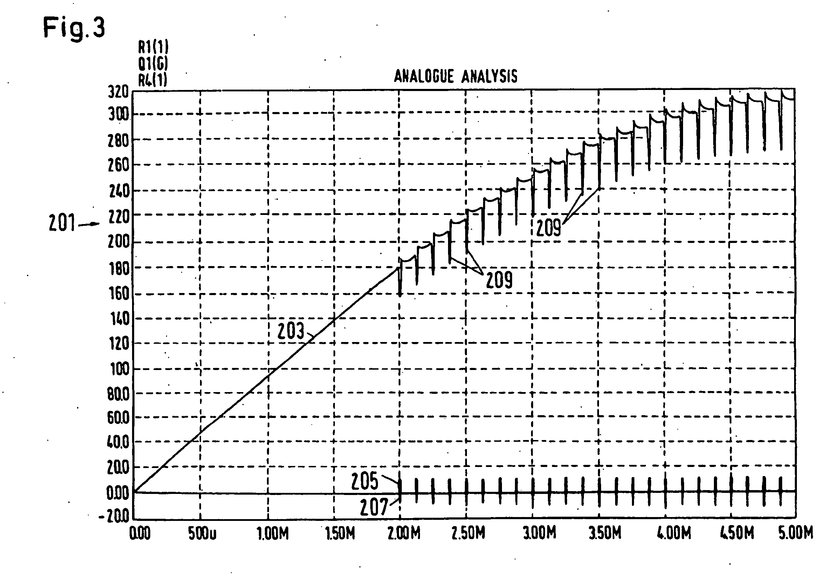

In Fig. 3 the display 201 of an oscilograph is shown. It shows three curves 203, 205, and 207 corresponding to the voltages measured at the points depicted by the reference numerals 139 (for the output voltage), 123 (for the control signal), and 137 (for the received voltage), respectively, during the first half of a half-wave of an rectified AC-voltage. To ensure a reliable and safe detection of the signal represented by the voltage-drop pulses 209 a protocol ensures that the transmission starts after a predetermined voltage (here 180 V) has been reached by the output voltage represented by the top curve 203. For the purpose of showing a signal having a realistic bit rate all bits transmitted belong to the same value, i.e. zero or one. The bit rate corresponds to 8 kHz, which leads to a byte rate of information transmitted taking into account the gaps required due to the protocol of 54 bits per half-cycle compared to 1 bit per half-cycle according to the known systems of the prior art. As can be seen from Fig. 4 the bit rate can be increased still quite a bit. Preferred are bit rates around 12 kHz which corresponds to up to 10 bytes (1 byte = 12 bit) of information per half-cycle of 50 Hz AC-current.

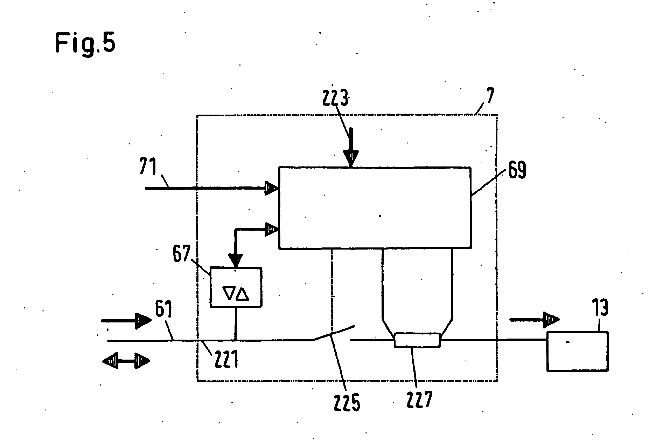

In Fig. 5 a schematic drawing of a luminaire module 7 is shown. A luminaire module communication unit 67 is connected to an input 221. The input 221 can be connected via a power line 61 with a subunit (not shown). The luminaire module communication unit 67 receives signals transmitted over said power line 61. A luminaire module control unit 69 evaluates the signals received. A code, for example an address, is assigned to the luminaire module as is depicted by an arrow 223. Upon receipt of a signal containing said assigned address and an instruction code to switch the emergency luminaire operated by said luminaire module 7 on or off a switch 225 is closed or opened accordingly. In other embodiments the operation can be controlled by other means instead of a switch. Additionally to the signal received over the power line 61 information received on an information line 71 from a general lighting plant can be taken into account when operating the emergency luminaire. The luminaire module further comprises a luminaire monitor unit depicted as a resistor 227. This monitor unit is used to monitor the function of the emergency luminaire. The status information among others can be transmitted via the power line 61 by the luminaire module communication unit 67 to the subunit.

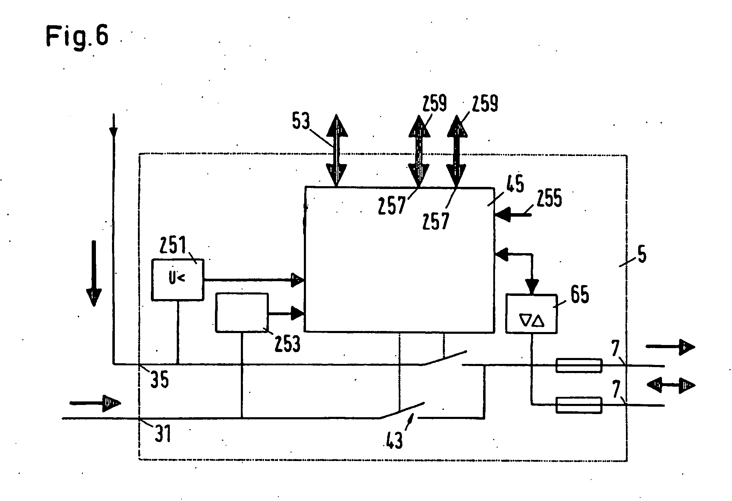

Fig. 6 shows a subunit 5. It comprises an input 31 connectable to a central unit, another input 35 connectable to a local electric main supply, and a switch over device 43 for alternatively connecting the input 31 or the other input 35 with the plurality of said end circuit outputs 7. A local control unit 45 controls the local switch over device 43. A local monitor unit 251 monitors the power supplied via the other input 35. Together with other information received from the general lighting plant the local control unit 45 independently of the central unit supplying power to the input 31 decides when to actuate the switchover device 43 and when to switch on or off any of the emergency luminaires operated by the luminaire modules connected to said plurality of end circuit outputs 7. Internal information gathered as well as external information can be evaluated in this decision process. For example information from the general lighting plant received by an information line 53 may be used. The subunit 5 comprises another monitor device 253 for detecting the type of voltage supplied at the input 31. From the fact that DC-current is supplied the control unit 45 can deduce that a central emergency condition has occurred. This information may also be used to decide whether the supplied power has to pass a rectifier in the subunit 5 (not shown) or not in order to deliver DC-current (that may be rectified AC-current) to the end circuit outputs 7.

The signals to achieve any switching of emergency luminaires are transmitted over the power lines via the communication units 65. Here only one is depicted but usually one communication unit 65 is associated with each end circuit output 7. To be able to be addressed by the luminaire modules transmitting signals, for example on the status of the emergency luminaires, an address is assigned to the subunit 5 or its local control unit 45, as is depicted schematically by an arrow 255. The locale control unit 45 further comprises a bus interface 257 to exchange date over a bus 259.

In another embodiment of a subunit another communication unit is associated with the input to which the power from the central unit is to be supplied to. Such an embodiment of the subunit can communicate with an adapted central unit via the power line connecting the central unit and the subunit. The adapted central unit comprises a communication unit associated with its output. Even though information may be interchanged in such an embodiment the subunit still operates the emergency luminaires and its local switch over device on its own, i.e. all decisions are taken by a logic incorporated in the subunit.

In different embodiments of an emergency lighting system comprising communication units with modified circuits a pulsed signalling can be realized even when AC-voltage is supplied to the emergency light end circuits instead of rectified DC-voltage under normal conditions. Accordingly the circuits of the luminaire module communication units of the luminaire modules working together with such embodiments of the emergency lighting system are modified as well.

## Claims

1. Emergency lighting system (1) comprising
a. a central unit (3) connectable to a central electrical main supply (15) comprising at least one output (21) and a central switch over device (19) for connecting said at least one output (21) with an emergency power supply (17) instead of said central electrical main supply (15) in case of a central emergency condition;
b. at least one subunit (5) having an input (31) connected to said at least one output (21) of the central unit (3), said at least one subunit (5) being configured for distributing electrical power to a plurality of end circuit outputs (7), wherein a communication unit (65) is associated with each of said plurality of end circuit outputs (7) for transmitting signals to luminaire modules (11) over power lines (61) of emergency light end circuit (9) connectable to said respective end circuit output (7), wherein said signals are intended to control the operation of emergency luminaires operated by said luminaire modules (11); and
c. a local control unit (45) configured to initiate the transmission of said signals for controlling the operation of individual luminaires by said signals especially in case of a local emergency detected by said local control unit (45), wherein said signals comprise a bit pattern containing codes by which said luminaire modules (11) are addressable, by which in turn said individual luminaires are operated,
**characterized in that**
said at least one subunit (5) comprises another input (35) connectable to a local electrical main supply (37) and a local switch over device (43) for connecting the plurality of end circuit outputs (7) alternatively with said other input (35) in case of a normal condition to supply electrical power from the local electrical main supply (37) or with said input (31) in case of a local emergency condition associated with a failure in the power supplied by the local electrical main supply to supply power from the central unit (3) to said plurality of end circuit outputs (7).

2. Emergency lighting system (1) according to claim 1, **characterized in that** said bit pattern of said signals is made up of short voltage-drop pulses induced by said communication units (65) in an output voltage of the power supplied to the respective one of said plurality of end circuit outputs (7).

3. Emergency lighting system (1) according to any one of the claims 1 to 2, **characterized in that** said local control unit (45) of said at least one subunit (5) is configured for monitoring internal and/or external information to detect said local emergency condition independently from a central control unit (23) of the central unit (3).

4. Emergency lighting system (1) according to any one of the claims 1 to 3, **characterized in that** said the central unit (3) comprises said emergency power supply (17), which itself comprises a battery and/or an emergency power generator.

5. Emergency lighting system (1) according to any one of the claims 1 to 4, **characterized in that** said communication units (65) are also capable of receiving said signals.

6. Emergency lighting system (19 according to any one of the claims 1 to 5, **characterized in that** said central unit (3) comprises one of said communication units for each of said at least one output (21) and said subunits (5) comprise a further one of said communication units associated with the input (31) connected to the central unit (3) for exchanging signals over the power lines (33) connecting the central unit (3) with said at least one subunit (5).

7. Emergency lighting system (1) according to one of the claims 1 to 6, **characterized by** having an information input for receiving information, especially on a switching status, from at least one general lighting plant (51), wherein the local control unit (45) of said at least one subunit (5) is configured such that the information received can be processed to influence the signals intended to control said luminaire modules (11).

8. Emergency lighting system (1) according to one of the claims 1 to 8, **characterized in that** said signals are transmitted and/or received according to a protocol, wherein said protocol ensures that said signals are only transmitted when the output voltage is within predetermined voltage boundaries.

9. Emergency lighting system (1) according to one of the claims 1 to 8, **characterized in that** said at least one subunit (5) comprises a current former for forming the power supplied by the central unit (3) or said local electric main supply (37) such that DC-current is supplied to said emergency light end circuits (9) and **in that** said end circuit outputs (7) of said at least one subunit (5), are high impedance outputs comprising an inductor (107) and in parallel a snubber diode (109) that is anti-parallel to the direction of the DC current supplied by said end circuit outputs (7) and wherein transmitter circuits of said communication units (65) comprise a resistor (119) in series with a solid-state switch (117) positioned between the two poles (113, 115) of said end circuit outputs (7), such that the voltage-drop pulses are induced in the output voltage by pulsing the solid-state switch (117).

10. Emergency lighting system (1) according to one of the claims 1 to 9, **characterized in that** receiver circuits of said communication units (65) comprise a resistor - capacitor network for receiving said signals.

11. Luminaire module (11) being connectable to power lines (61) of an emergency light end circuit (9) for operating at least one emergency luminaire comprising a luminaire module communication unit (67) configured to receive signals transmitted over said power lines (61) and a luminaire module control unit (69) connected to said luminaire module communication unit (67) configured to control the operation of said at least one emergency luminaire according to said signals received, and in that one or several codes, especially an address, are assigned to said luminaire module (11) and that said luminaire module control unit (69) is configured to act upon receipt of one of said signals comprising a bit pattern containing one of said codes assigned to said luminaire module (11),
**characterized in that** said luminaire module communication unit is capable to transmit signals over said power lines.

12. Luminaire module (11) according to claim 11, **characterized in that** said luminaire module communication unit (67) is configured to receive said signals comprising said bit pattern made up of short voltage-drop pulses in an voltage supplied over said power lines (61).

13. Luminaire module (11) according to claims 11 or 12, **characterized by** comprising a luminaire monitoring unit to monitor the status of said at least one emergency luminaire.

14. Luminaire module (11) according to any one of the claims 11 to 13, **characterized by** an information input for receiving information, especially switching information, transmittable from a general lighting plant (51), wherein the luminaire module control unit (69) is configured such that the information received can be processed to influence the operation of said at least one emergency luminaire.

15. Luminaire module (11) according to any one of the claims 11 to 14, **characterized in that** said luminaire module communication unit is configured such that said signals are transmitted and/or received according to a protocol, wherein said protocol ensures that said signals are only transmitted when the output voltage is within predetermined voltage boundaries.

16. Luminaire module (11) according to any one of the claims 11 to 15, **characterized by** being configured to switch operated emergency luminaires on and/or off in time periods only, not being provided by said protocol for the transmission of said signals.

17. Emergency lighting system (1) according to one of the claims 1 to 10, **characterized by** comprising luminaire modules (11) according to any one of the claims 11 to 16.

18. Emergency lighting system (1) according to any one the claims 1 to 10 or 17, **characterized in that** said bit patterns of said signals are coded at a frequency that is considerably higher than the frequency of AC-power supplied by the central main supply (15) and/or said local electrical main supply (37).

## Patentansprüche

1. Notbeleuchtungssystem (1), umfassend
a. eine zentrale Einheit (3), die mit einer zentralen elektrischen Hauptversorgung (15) verbindbar ist, umfassend mindestens einen Ausgang (21) und eine zentrale Umschaltvorrichtung (19), um den mindestens einen Ausgang (21) im Falle eines zentralen Notfall-Zustandes mit einer Notstromversorgung (17) anstatt mit der zentralen elektrischen Hauptversorgung (15) zu verbinden,
b. mindestens eine Untereinheit (5) mit einem Eingang (31), der mit dem mindestens einen Ausgang (21) der zentralen Einheit (3) verbunden ist, wobei die mindestens eine Untereinheit (5) konfiguriert ist, elektrische Leistung an eine Mehrzahl von End-Stromkreis-Ausgänge (7) zu verteilen, wobei mit jedem der End-Stromkreis-Ausgänge (7) eine Kommunikationseinheit (65) verknüpft ist, um Signale über Stromleitungen (61) von Notbeleuchtungs-End-Stromkreisen (9) zu Leuchtmodulen (11) zu übertragen, die mit den jeweiligen End-Stromkreis-Ausgängen (7) verbindbar sind, wobei die Signale vorgesehen sind, einen Betrieb von Notleuchten zu steuern, die durch die Leuchtmodule (11) betrieben werden; und
c. eine lokale Steuereinheit (45), die konfiguriert ist, eine Übertragung der Signale zum Steuern des Betriebs der individuellen Leuchten durch die Signale, insbesondere im Fall eines lokalen Notfalls, der von der lokalen Steuereinheit (45) detektiert wird, zu initiieren, wobei die Signale ein Bitmuster umfassen, welches einen Code beinhaltet, mit dem die Leuchtmodule (11) adressierbar sind, durch welche wiederum die individuellen Leuchten betrieben werden,
**dadurch gekennzeichnet, dass**
die mindestens eine Untereinheit (5) einen weiteren Eingang (35), der mit einer lokalen elektrischen Hauptversorgung (37) verbindbar ist, und eine lokale Umschaltvorrichtung (43) umfasst, um die Mehrzahl von End-Stromkreis-Ausgänge (7) alternativ im Falle eines Normalzustandes mit dem weiteren Eingang (35) zu verbinden, um elektrische Leistung von der lokalen elektrischen Hauptversorgung (37) bereitzustellen, oder, im Falle eines lokalen Notfall-Zustandes, der mit einem Ausfall der Leistung verbunden ist, die von der lokalen elektrischen Hauptversorgung bereitgestellt wird, mit dem Eingang (31) zu verbinden, um der Mehrzahl von End-Stromkreisen (7) Leistung von der zentralen Einheit (3) bereitzustellen.

2. Notbeleuchtungssystem (1) nach Anspruch 1, **dadurch gekennzeichnet, dass** das Bitmuster der Signale aus kurzen Spannungsabfall-Pulsen gebildet ist, die durch die Kommunikationseinheiten (65) in einer Ausgangsspannung der dem mindestens einen der Mehrzahl von End-Stromkreisen (7) bereitgestellten Leistung verursacht werden.

3. Notbeleuchtungssystem (1) nach einem der Ansprüche 1 oder 2, **dadurch gekennzeichnet, dass** die lokale Steuereinheit (45) der mindestens einen Untereinheit (5) konfiguriert ist, um interne und/oder externe Informationen zu überwachen, um einen lokalen Notfall-Zustand unabhängig von einer zentralen Steuereinheit (23) der zentralen Einheit (3) zu detektieren.

4. Notbeleuchtungssystem (1) nach einem der Ansprüche 1 bis 3, **dadurch gekennzeichnet, dass** die zentrale Einheit (3) die Notstromversorgung (17) umfasst, die ihrerseits eine Batterie und/oder einen Notstromgenerator umfasst.

5. Notbeleuchtungssystem (1) nach einem der Ansprüche 1 bis 4, **dadurch gekennzeichnet, dass** die Kommunikationseinheiten (65) auch geeignet sind, die Signale zu empfangen.

6. Notbeleuchtungssystem (1) nach einem der Ansprüche 1 bis 5, **dadurch gekennzeichnet, dass** die zentrale Einheit (3) für jeden des mindestens einen Ausgangs (21) eine der Kommunikationseinheiten umfasst und die Untereinheiten (5) eine weitere der Kommunikationseinheiten umfassen, welche dem mit der zentralen Einheit (3) verbundenen Eingang (31) zugeordnet ist, um Signale über die Stromleitungen (33) auszutauschen, die die zentrale Einheit (3) mit der mindestens einen Untereinheit (5) verbinden.

7. Notbeleuchtungssystem (1) nach einem der Ansprüche 1 bis 6, **gekennzeichnet durch** einen Informationseingang zum Empfangen von Informationen, insbesondere über einen Schaltzustand, von mindestens einer allgemeinen Beleuchtungsanlage (51), wobei die lokale Steuereinheit (45) der mindestens einen Untereinheit (5) konfiguriert ist, die empfangenen Informationen verarbeiten zu können, um die zur Steuerung der Beleuchtungsmodule (11) vorgesehenen Signale zu beeinflussen.

8. Notbeleuchtungssystem (1) nach einem der Ansprüche 1 bis 7, **dadurch gekennzeichnet, dass** die Signale gemäß einem Protokoll übertragen und/oder empfangen werden, wobei das Protokoll gewährleistet, dass Signale nur übertragen werden, wenn die Ausgangsspannung innerhalb vorbestimmter Spannungsgrenzen liegt.

9. Notbeleuchtungssystem (1) nach einem der Ansprüche 1 bis 8, **dadurch gekennzeichnet, dass** die mindestens eine Untereinheit (5) einen Stromformer umfasst, um die von der zentralen Einheit (3) oder der lokalen elektrischen Hauptversorgung (37) bereitgestellte Leistung derart zu formen, dass ein Gleichstrom für die Notbeleuchtungs-End-Stromkreise (9) bereitgestellt wird, und dass die End-Stromkreis-Ausgänge (7) der mindestens einen Untereinheit (5) Hochimpendanz-Ausgänge sind, die eine Induktivität (107) und eine parallel geschaltete Dämpfungsdiode (109), die anti-parallel zur Richtung des Gleichstromes, der von den End-Stromkreis-Ausgängen (7) bereitgestellt wird, ist, umfasst, und wobei Übertragurigs-Stromkreise der Kommunikationseinheiten (65) einen Widerstand (119) umfassen, der in Reihe mit einem Festkörper-Schalter (117) geschaltet ist, der zwischen zwei Polen (113, 115) der End-Stromkreis-Ausgänge (7) derart angeordnet ist, dass die Spannungsabfall-Pulse in der Ausgangsspannung durch Pulsen des Festkörper-Schalters (117) induziert werden.

10. Notbeleuchtungssystem (1) nach einem der Ansprüche 1 bis 9, **dadurch gekennzeichnet, dass** Empfangs-Schaltkreise der Kommunikationseinheiten (65) ein Widerstands-Kapazität-Netzwerk zum Empfang der Signale umfassen.

11. Beleuchtungsmodul (11), welches mit Stromleitungen (61) eines Notbeleuchtungs-End-Stromkreises (9) verbindbar ist, zum Betreiben mindestens einer Notleuchte, umfassend eine Beleuchtungsmodul-Kommunikationseinheit (67), die zum Empfang von Signalen über die Stromleitungen (61) konfiguriert ist, und eine mit der Beleuchtungsmodul-Kommunikationseinheit (67) verbundene Beleuchtungsmodul-Steuereinheit (69), die konfiguriert ist, um einen Betrieb der Notleuchte entsprechend der empfangenen Signale zu steuern, und wobei ein oder mehrere Codes, insbesondere eine Adresse, dem Beleuchtungsmodul (11) zugewiesen ist und die Beleuchtungsmodul-Steuereinheit (69) konfiguriert ist, auf einen Empfang eines der Signale, welches ein Bitmuster umfasst, welches einen der Notleuchte zugewiesenen Code enthält, hin zu agieren,
**dadurch gekennzeichnet, dass**
die Beleuchtungsmodul-Kommunikationseinheit fähig ist, Signale über die Stromleitungen zu übertragen.

12. Beleuchtungsmodul (11) nach Anspruch 11, **dadurch gekennzeichnet, dass** die Beleuchtungsmodul-Kommunikationseinheit (67) eingerichtet ist, die Signale zu empfangen, die das Bitmuster umfassen, welches aus kurzen Spannungsabfall-Pulsen in einer Spannung besteht, die an den Stromleitungen (61) bereitgestellt wird.

13. Beleuchtungsmodul (11) nach Anspruch 11 oder 12, **gekennzeichnet durch** eine Beleuchtungs-Überwachungseinheit zum Überwachen eines Status der mindestens einen Notleuchte.

14. Beleuchtungsmodul (11) nach einem der Ansprüche 11 bis 13, **gekennzeichnet durch** einen Informationseingang zum Empfangen von Informationen, insbesondere Schalt-Informationen, die von einer allgemeinen Beleuchtungsanlage (51) übertragbar sind, wobei die Beleuchtungsmodul-Steuereinheit (69) derart konfiguriert ist, dass die empfangenen Informationen verarbeitet werden können, um einen Betrieb der mindestens einen Notleuchte zu beeinflussen.

15. Beleuchtungsmodul (11) nach einem der Ansprüche 11 bis 14, **dadurch gekennzeichnet, dass** die Beleuchtungsmodul-Kommunikationseinheit konfiguriert ist, die Signale gemäß einem Protokoll zu übertragen und/oder zu empfangen, wobei das Protokoll sicherstellt, dass die Signale nur übertragen werden, wenn die Ausgangsspannung innerhalb vorbestimmter Spannungsgrenzen liegt.

16. Beleuchtungsmodul (11) nach einem der Ansprüche 11 bis 15, **dadurch gekennzeichnet, dass** das Beleuchtungsmodul konfiguriert ist, betriebene Notleuchten ausschließlich in Zeitperioden anzuschalten und/oder auszuschalten, die nicht durch das Protokoll für das Übertragen von Signalen bestimmt sind.

17. Notbeleuchtungssystem (1) nach einem der Ansprüche 1 bis 10, **dadurch gekennzeichnet, dass** dieses Beleuchtungsmodule (11) nach einem der Ansprüche 11 bis 16 umfasst.

18. Notbeleuchtungssystem (1) nach einem der Ansprüche 1 bis 10 oder 17, **dadurch gekennzeichnet, dass** die Bitmuster der Signale in einer Frequenz kodiert sind, die deutlich höher als die Frequenz einer Wechselspannung ist, die von der zentralen Hauptversorgung (15) und/oder der lokalen elektrischen Hauptversorgung (37) bereitgestellt wird.

## Revendications

1. Système d'éclairage de secours (1) comprenant
a. une unité centrale (3) pouvant être connectée à une alimentation électrique principale centrale (15) comprenant au moins une sortie (21) et un interrupteur central sur dispositif (19) pour connecter ladite au moins une sortie (21) à une alimentation électrique de secours (17) au lieu de ladite alimentation électrique principale centrale (15) dans le cas d'une situation d'urgence centrale ;
b. au moins une sous-unité (5) ayant une entrée (31) connectée à ladite au moins une sortie (21) de l'unité centrale (3), ladite au moins une sous-unité (5) étant configurée pour distribuer de l'électricité à une pluralité de sorties de circuit d'extrémité (7), une unité de communication (65) étant associée à chacune de ladite pluralité de sorties de circuit d'extrémité (7) pour transmettre des signaux à des modules luminaires (11) sur les lignes électriques (61) du circuit d'extrémité de l'éclairage de secours (9) pouvant être relié à ladite sortie de circuit d'extrémité respective (7), lesdits signaux étant censés contrôler le fonctionnement des luminaires de secours actionnés par lesdits modules luminaires (11) ; et
c. une unité de contrôle locale (45) configurée pour lancer la transmission desdits signaux pour contrôler le fonctionnement des luminaires individuels grâce auxdits signaux en particulier dans le cas d'une situation d'urgence locale détectée par ladite unité de contrôle locale (45), lesdits signaux comprennent une configuration binaire contenant des codes au moyen desquels lesdits modules luminaires (11) sont adressables, au moyen desquels lesdits luminaires individuels sont actionnés tour à tour,
**caractérisé en ce que**
ladite au moins une sous-unité (5) comprend une autre entrée (35) pouvant être connectée à une alimentation électrique principale locale (37) et un interrupteur local sur dispositif (43) pour connecter la pluralité de sorties de circuit d'extrémité (7) en variante avec ladite autre entrée (35) dans le cas d'une situation normale pour fournir de l'électricité à partir de l'alimentation électrique principale locale (37) ou avec ladite entrée (31) dans le cas d'une situation d'urgence locale associée à une coupure de l'électricité fournie par l'alimentation électrique principale locale pour fournir de l'électricité à partir de l'unité centrale (3) à ladite pluralité de sorties de circuit d'extrémité (7).

2. Système d'éclairage de secours (1) selon la revendication 1, **caractérisé en ce que** ladite configuration binaire desdits signaux est composée d'impulsions de chute de tension brèves produites par lesdites unités de communication (65) dans une tension de sortie de l'électricité fournie à la sortie respective de ladite pluralité de sorties de circuit d'extrémité (7).

3. Système d'éclairage de secours (1) selon l'une quelconque des revendications 1 à 2, **caractérisé en ce que** ladite unité de contrôle locale (45) de ladite au moins une sous-unité (5) est configurée pour surveiller les informations internes et/ou externes pour détecter ladite situation d'urgence locale indépendamment d'une unité de contrôle centrale (23) de l'unité centrale (3).

4. Système d'éclairage de secours (1) selon l'une quelconque des revendications 1 à 3, **caractérisé en ce que** ladite unité centrale (3) comprend ladite alimentation électrique de secours (17), qui comprend elle-même une batterie et/ou un générateur électrique de secours.

5. Système d'éclairage de secours (1) selon l'une quelconque des revendications 1 à 4, **caractérisé en ce que** lesdites unités de communication (65) sont également capables de recevoir lesdits signaux.

6. Système d'éclairage de secours (1) selon l'une quelconque des revendications 1 à 5, **caractérisé en ce que** ladite unité centrale (3) comprend une desdites unités de communication pour chacune desdites au moins une sortie (21) et lesdites sous-unités (5) comprennent une autre desdites unités de communication associée à l'entrée (31) connectée à l'unité centrale (3) pour échanger des signaux sur les lignes électriques (33) connectant l'unité centrale (3) à ladite au moins une sous-unité (5).

7. Système d'éclairage de secours (1) selon l'une des revendications 1 à 6, **caractérisé en ce qu'**il possède une entrée d'informations pour recevoir des informations, en particulier sur un état de commutation, depuis au moins un équipement d'éclairage général (51), dans lequel l'unité de contrôle locale (45) de ladite au moins une sous-unité (5) est configurée de telle sorte que les informations reçues peuvent être traitées pour influencer les signaux censés contrôler lesdits modules luminaires (11).

8. Système d'éclairage de secours (1) selon l'une des revendications 1 à 8, **caractérisé en ce que** lesdits signaux sont transmis et/ou reçus selon un protocole, ledit protocole garantissant que lesdits signaux ne sont transmis que lorsque la tension de sortie est dans les limites de la tension prédéterminée.

9. Système d'éclairage de secours (1) selon l'une des revendications 1 à 8, **caractérisé en ce que** ladite au moins une sous-unité (5) comprend un formateur de courant pour former l'électricité fournie par l'unité centrale (3) ou ladite alimentation électrique principale locale (37) de telle sorte qu'un courant continu soit fourni auxdits circuits d'extrémité de l'éclairage de secours (9) et **en ce que** lesdites sorties de circuit d'extrémité (7) de ladite au moins une sous-unité (5) sont des sorties de haute impédance comprenant une bobine d'induction (107) et en parallèle, une diode d'amortissement (109) qui est antiparallèle à la direction du courant continu fourni par lesdites sorties de circuit d'extrémité (7) et dans lequel les circuits de transmission desdites unités de communication (65) comprennent une résistance (119) en série avec un commutateur à semi-conducteur (117) positionné entre les deux pôles (113, 115) desdites sorties de circuit d'extrémité (7), de telle sorte que les impulsions de chute de tension brèves sont induites dans la tension de sortie en envoyant des impulsions sur le commutateur à semi-conducteur (117).

10. Système d'éclairage de secours (1) selon l'une des revendications 1 à 9, **caractérisé en ce que** les circuits récepteurs desdites unités de communication (65) comprennent un réseau de résistance - condensateur pour recevoir lesdits signaux.

11. Module luminaire (11) pouvant être connecté aux lignes électriques (61) d'un circuit d'extrémité d'éclairage de secours (9) pour actionner au moins un luminaire de secours comprenant une unité de communication de module luminaire (67) configuré pour recevoir des signaux émis sur lesdites lignes électriques (61) et une unité de contrôle de module luminaire (69) connectée à ladite unité de communication de module luminaire (67) configurée pour contrôler le fonctionnement dudit au moins un luminaire de secours en fonction desdits signaux reçus, et en ce qu'un ou plusieurs codes, en particulier une adresse, soient attribués audit module luminaire (11) et en ce que ladite unité de contrôle de module luminaire (69) soit configurée pour agir à la réception d'un desdits signaux comprenant une configuration binaire contenant un desdits codes attribués audit module luminaire (11),
**caractérisé en ce que** ladite unité de communication de module luminaire est capable de transmettre les signaux sur lesdites lignes électriques.

12. Module luminaire (11) selon la revendication 11, **caractérisé en ce que** ladite unité de communication de module luminaire (67) est configurée pour recevoir lesdits signaux comprenant ladite configuration binaire constituée d'impulsions de chute de tension brèves dans une tension fournie sur lesdites lignes électriques (61).

13. Module luminaire (11) selon les revendications 11 ou 12, **caractérisé en ce qu'**il comprend une unité de surveillance de luminaire pour surveiller l'état dudit au moins un luminaire de secours.

14. Module luminaire (11) selon l'une quelconque des revendications 11 à 13, **caractérisé par** une entrée d'informations pour recevoir des informations, en particulier des informations de commutation, pouvant être transmises à partir d'un équipement d'éclairage général (51), dans lequel l'unité de contrôle de module luminaire (69) est configurée de telle manière que les informations reçues puissent être traitées pour influencer le fonctionnement dudit au moins un luminaire de secours.

15. Module luminaire (11) selon l'une quelconque des revendications 11 à 14, **caractérisé en ce que** ladite unité de communication de module luminaire est configurée de telle sorte que lesdits signaux sont transmis et/ou reçus en fonction d'un protocole, dans lequel ledit protocole garantit que lesdits signaux ne sont transmis que lorsque la tension de sortie se situe dans les limites de tension prédéterminées.

16. Module luminaire (11) selon l'une quelconque des revendications 11 à 15, **caractérisé en ce qu'**il est configuré pour allumer et/ou éteindre les luminaires de secours actionnés uniquement au cours de périodes de temps n'étant pas prévues par ledit protocole pour la transmission desdits signaux.

17. Système d'éclairage de secours (1) selon l'une des revendications 1 à 10, **caractérisé en ce qu'**il comprend des modules luminaires (11) selon l'une quelconque des revendications 11 à 16.

18. Système d'éclairage de secours (1) selon l'une quelconque des revendications 1 à 10 ou 17, **caractérisé en ce que** lesdites configurations binaires desdits signaux sont codées à une fréquence qui est considérablement supérieure à la fréquence du courant alternatif fourni par l'alimentation principale centrale (15) et/ ou ladite alimentation électrique principale locale (37).
